# EUROPEAN PATENT APPLICATION

(11) **EP 2 436 727 A1**
(43) Date of publication of application: **04.04.2012**
(21) Application number: 11182800.0
(22) Date of filing: 26.09.2011
(51) Int. Cl.: C08K 5/00, C08K 5/44, C08K 5/5398, C08L 21/00, B60C 1/00

(54) **Rubber composition and pneumatic tire with tread**

(30) Priority: 30.09.2010 US 894295
(71) Applicant: The Goodyear Tire & Rubber Company, Akron, OH 44316-0001 (US)
(72) Inventor: Costantini, Nicola, L-1260 Luxembourg (LU)
(74) Representative: Kutsch, Bernd

(57) **Abstract**

The present invention is directed to a rubber composition comprising at least one diene based rubber;
a sulfur donor;
a sulfenamide accelerator; and
a dithiophosphate of the formula 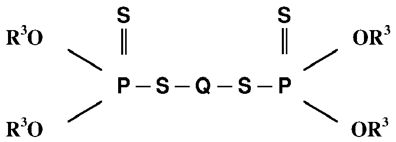 wherein Q is divalent Zn or S, and R³ may be identical or different, and R³ is hydrogen or a monovalent hydrocarbon group of 1 to 18 carbon atoms; and wherein the zinc content of the rubber composition is less than 0.5 parts by weight, per 100 parts by weight of elastomer (phr) as Zn metal.

The rubber composition may be used in a tread of a tire.

## Description

### Background of the Invention

Rubber compounds for use in pneumatic tires conventionally utilize a sulfur-based curing system incorporating several curatives, such as elemental sulfur or sulfur donors, accelerators, stearic acid, and zinc oxide. Recently it has become desirable to reduce the amount of zinc in the tire rubber. It would therefore be desirable to have a rubber compound and pneumatic tire cured using a cure system with the potential for a reduced zinc content in the rubber composition.

### Summary of the Invention

The invention is directed to a rubber composition in accordance with claim 1, its use in a tire tread, and a pneumatic tire in accordance with claim 15.

Dependent claims refer to preferred embodiments of the invention.

Preferably, the present invention is directed to a pneumatic tire comprising a ground contacting tread, the tread comprising a rubber composition comprising
at least one additional diene based rubber;
silica;
a sulfur donor;
a sulfenamide accelerator; and
a dithiophosphate of the formula 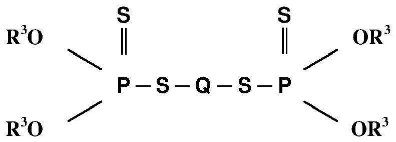 wherein Q is divalent Zn or S, R³ may be identical or different, and R³ is hydrogen or a monovalent hydrocarbon group of 1 to 18 carbon atoms;
wherein the zinc content of the rubber composition is less than 0.5 parts by weight, per 100 parts by weight of elastomer (phr) as Zn meta.

### Detailed Description of the Invention

In a preferred embodiment, there is disclosed a pneumatic tire comprising a ground contacting tread, the tread comprising a rubber composition comprising
at least one diene based rubber;
optionally silica;
a sulfur donor;
a sulfenamide accelerator; and
a dithiophoshate of the formula 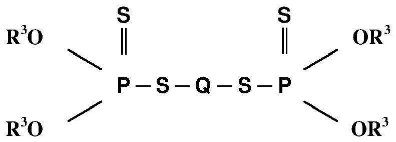 wherein Q is divalent Zn or S, R³ may be identical or different, and R³ is hydrogen or a monovalent hydrocarbon group of 1 to 18 carbon atoms; and wherein the zinc content of the rubber composition is less than 0.5 parts by weight, per 100 parts by weight of elastomer (phr) as Zn metal.

This rubber composition may, however, also be used in other tire components or other rubber articles.

The rubber composition includes a dithiophosphate of the formula 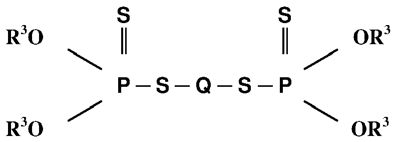 wherein Q is divalent Zn or S, and R³ may be identical or different, and R³ is hydrogen or a monovalent hydrocarbon group of 1 to 18 carbon atoms. R³ may be straight chain, branched, substituted or non-substituted alkyl or cycloalkyl.

In one embodiment, Q is divalent zinc, and the dithiophophate is a zinc dithiophophate. In one embodiment, the dithiophosphate is zinc dibutylphosphorodithioate or zinc dibutylphosphorodithioate.

In one embodiment, Q is sulfur, and the dithiophosphate is a dithiophosphoryl polysulfide.

In one embodiment, the rubber composition comprises from 1 to 10 phr of a dithiophosphate. In one embodiment, the rubber composition comprises from 2 to 5 phr of a dithiophosphate.

Zinc is added to the rubber composition in the form of zinc oxide or other zinc salts, such a zinc 2-ethylhexanoate and the like. The zinc content of the rubber composition is relatively low, to promote improved abrasion resistance of the rubber composition. The rubber composition has a zinc content of less than 0.5 phr as zinc metal. In one embodiment, the rubber composition has a zinc content of less than 0.2 phr as zinc metal. In one embodiment, the rubber composition has a zinc content of less than 0.1 phr as zinc metal.

The rubber composition includes rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials.

The rubber composition optionally includes at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one embodiment, a synthetic or natural polyisoprene rubber may be used.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105ºC. Suitable polybutadiene rubbers are available commercially, such as Budene® 1207 from Goodyear.

In one embodiment, the rubber composition includes a styrene-butadiene rubber. Suitable styrene-butadiene rubber includes emulsion and/or solution polymerization derived styrene/butadiene rubbers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, an emulsion polymerization derived styrene/butadiene (E-SBR) may be used having a relatively conventional styrene content of greater than 36 percent bound styrene. By emulsion polymerization prepared E-SBR, it is meant that styrene and 1,3-butadiene are copolymerized as an aqueous emulsion. Such are well known to those skilled in such art.

In one embodiment, a solution polymerization prepared styrene-butadiene rubber (S-SBR) having a bound styrene content of greater than 36 percent may be used. Suitable solution polymerized styrene-butadiene rubbers may be made, for example, by organo lithium catalysis in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are known in the art, for example as disclosed in US-B- 4,843,120; US-B-5,137,998; US-B-5,047,483; US-B-5,272,220; US-B-5,239,009; US-B-5,061,765; US-B-5,405,927; US-B-5,654,384; US-B-5,620,939; US-B-5,627,237; US-B-5,677,402; US-B-6,103,842; and US-B-6,559,240.

Suitable solution polymerized styrene-butadiene rubbers may be tin- or silicon-coupled. In one embodiment, suitable SSBR may be at least partially silicon coupled.

Suitable solution polymerized styrene-butadiene rubber may be functionalized with one or more functional groups, including methoxysilyl groups.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition preferably includes silica. The rubber composition preferably includes from 50 to 150 phr of silica. In another embodiment, from 60 to 120 phr of silica are used.

The commonly employed siliceous pigments which may be used in the rubber compound include conventional pyrogenic and precipitated siliceous pigments (silica). In one embodiment, precipitated silica is used.

Various commercially available silicas may be used, such as, for example herein, silicas commercially available from PPG Industries under the Hi-Sil trademark with designations 210 and 243, silicas available from Rhodia, with, for example, designations of Z1165MP and Z165GR; and silicas available from Degussa AG with, for example, designations VN2 and VN3.

Commonly employed carbon blacks can be used as a conventional filler preferably in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B-6,242,534; US-B- 6,207,757; US-B- 6,133,364; US-B- 6,372,857; US-B-5,395,891; or US-B- 6,127,488, and plasticized starch composite filler including that disclosed in US-B- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z I

in which Z is selected from the group consisting of 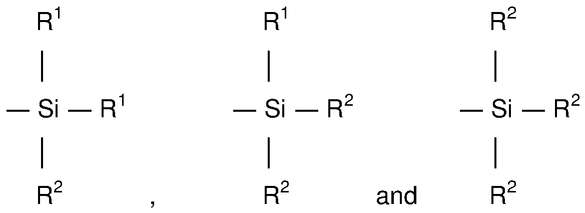 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 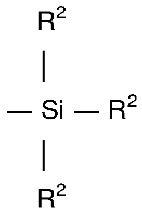 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire.

Vulcanization of the pneumatic tire of the present invention is generally carried at conventional temperatures ranging from 100°C to 200°C. Any of the usual vulcanization processes may be used such as heating in a press or mold, heating with superheated steam or hot air.

The invention is further illustrated by the following example.

### Example 1

In this example, the effect of using a specific combination of curatives including a dithiophosphate on the properties of cured rubber samples is illustrated. Five rubber compounds were prepared using a two-stage mix procedure. All samples conformed to the basic recipe of Table 1 with varying compositions of curatives as shown in Table 2, with amounts shown in phr. Each of the samples was evaluated for various physical properties, as shown in Table 3.

**Table 1**

| | |
|---|---|
| SBR¹ | 103.13 |
| Polybutadiene | 25 |
| TDAE Oil | 15 |
| Silica | 90 |
| Silane | 7.2 |

| | |
|---|---|
| ¹ Solution polymerized styrene-butadiene with 39 percent bound styrene, 14.1 percent vinyl and Tg -33.2°C. | |

**Table 2**

| Sample No. | 1 | 2 | 3 | 4 | 5 |
|---|---|---|---|---|---|
| Zinc dithiophosphate ¹ | 0 | 0 | 2.5 | 4 | 0 |
| Zinc dithiophosphate ² | 0 | 0 | 0 | 0 | 4 |
| Guanidine | 2.4 | 1.5 | 0 | 0 | 0 |
| Sulfur | 1.9 | 1.9 | 2 | 2 | 2 |
| Zinc Oxide | 2.5 | 0.5 | 0.7 | 0 | 0 |
| Sulfenamide | 2.1 | 2.1 | 0.8 | 0.8 | 0.8 |

| | | | | | |
|---|---|---|---|---|---|
| 1 zinc dialky dithiophosphate, with long carbon chain length as ZBOP/S from Rheinchemie 2 zinc dibutylphosphorodithioate, as Rhenogran TP-50 from Rheinchemie. | | | | | |

**Table 3**

| Sample No. | 1 | 2 | 3 | 4 | 5 |
|---|---|---|---|---|---|
| Physical Properties (Cured 14 minutes at 160°C) | | | | | |
| | | | | | |
| Elongation at Break, % | 493 | 553 | 457 | 508 | 481 |
| True Tensile, MPa | 110 | 125 | 112 | 120 | 109 |
| 100% Modulus, MPa | 2.1 | 1.9 | 2.5 | 2.1 | 2.2 |
| 300% Modulus, MPa | 11.2 | 9.7 | 12.8 | 10.9 | 11.3 |
| Tensile Strength, MPa | 18.5 | 19.1 | 19.8 | 19.6 | 18.8 |
| Shore A Hardness | 65 | 66 | 69 | 66 | 66 |
| | | | | | |
| Rebound 23 °C | 30.4 | 28 | 29.1 | 30.3 | 31.6 |
| Rebound 100°C | 61 | 56.5 | 61 | 59.9 | 59.2 |
| | | | | | |

| RPA (at 190°C) | | | | | |
|---|---|---|---|---|---|
| G' at 1% strain | 3.1 | 3.1 | 3.3 | 3.4 | 3.5 |
| G' at 50% strain | 1.02 | 0.94 | 1.01 | 1.01 | 1.01 |
| Tanδ at 10% strain | 0.13 | 0.119 | 0.409 | 0.401 | 0.401 |
| | | | | | |

| Rotary Drum Abrasion | | | | | |
|---|---|---|---|---|---|
| volume loss, mm3 | 131 | 117 | 103 | 91 | 92 |
| | | | | | |

| MDR | | | | | |
|---|---|---|---|---|---|
| T-5 at 121°C | 33 | 32 | 37 | 26 | 25 |
| T-25 at 150 °C | 5.8 | 5.1 | 6.4 | 4.6 | 4.4 |
| T-90 at 150°C | 10.4 | 9.2 | 19.7 | 14 | 14.5 |
| Min Torque at 150°C | 3.9 | 4.2 | 4.2 | 4.3 | 4.3 |
| Max Torque at 150°C | 20.1 | 20 | 24.4 | 23.1 | 23.3 |
| Delta Torque | 16.3 | 15.8 | 20.2 | 18.8 | 19 |

| Goodrich Blowout | | | | | |
|---|---|---|---|---|---|
| Time, min | 16 | 15.4 | 60 | 60 | 60 |
| Temperature Rise, °C | 48.5 | 50.5 | 43 | 44 | 48 |

### Example 2

In this example, the effect of using a specific combination of curatives including a dithiophosphate on the properties of cured rubber samples using various SBR types is illustrated. Six rubber compounds were prepared using a two-stage mix procedure. All samples conformed to the basic recipe of Table 4 with varying compositions of curatives as shown in Table 5, with amounts shown in phr. Each of the samples was evaluated for various physical properties, as shown in Table 6.

**Table 4**

| Sample No. | 6 | 7 | 8 | 9 | 10 | 11 |
|---|---|---|---|---|---|---|
| SBR¹ | 103.13 | 103.13 | 0 | 0 | 0 | 0 |
| SBR² | 0 | 0 | 103.13 | 103.13 | 0 | 0 |
| SBR³ | 0 | 0 | 0 | 0 | 103.13 | 103.13 |
| Polybutadiene | 25 | 25 | 25 | 25 | 25 | 25 |
| TDAE Oil | 15 | 15 | 15 | 15 | 15 | 15 |
| Silica | 90 | 90 | 90 | 90 | 90 | 90 |
| Silane | 7.2 | 7.2 | 7.2 | 7.2 | 7.2 | 7.2 |

| | | | | | | |
|---|---|---|---|---|---|---|
| ¹ Solution polymerized styrene-butadiene with 39 percent bound styrene, 14.1 percent vinyl and Tg -33.2°C. ² Emulsion polymerized styrene-butadiene with 40 percent bound styrene and Tg -36°C. ³ Solution polymerized styrene-butadiene with 25 percent bound styrene, 50 percent vinyl. | | | | | | |

**Table 5**

| | | | | | | |
|---|---|---|---|---|---|---|
| Zinc Oxide | 2.1 | 1 | 2.5 | 1 | 2.5 | 1 |
| Dithiophosphate¹ | 0 | 2.2 | 0 | 2.2 | 0 | 2.2 |
| Sulfenamide | 2.1 | 0.8 | 2.1 | 0.8 | 2.1 | 0.8 |
| Guanidine | 2.4 | 0 | 2.4 | 0 | 2.1 | 0 |
| Sulfur | 2 | 2 | 2 | 2 | 2 | 2 |

| | | | | | | |
|---|---|---|---|---|---|---|
| ¹ Dithiophosphoryl polysulfide, as SDT/S from Rheinchemie | | | | | | |

**Table 6**

| Sample No. | 6 | 7 | 8 | 9 | 10 | 11 |
|---|---|---|---|---|---|---|
| Physical Properties (Cured 14 minutes at 160°C) | | | | | | |
| | | | | | | |
| Elongation at Break, % | 467 | 524 | 514 | 594 | 417 | 394 |
| True Tensile, MPa | 100 | 120 | 104 | 129 | 80 | 80 |
| 100% Modulus, MPa | 2.2 | 2.1 | 2 | 2 | 2 | 2.4 |
| 300% Modulus, MPa | 11.2 | 10.6 | 9.7 | 8.7 | 11 | 12.9 |
| Tensile Strength, MPa | 17.5 | 19.2 | 16.9 | 18.6 | 15.3 | 16.2 |
| Shore A Hardness | 67 | 66 | 68 | 68 | 63 | 68 |
| | | | | | | |
| Rebound 23°C | 29.1 | 27.2 | 26.3 | 26.6 | 29.1 | 27.9 |
| Rebound 100°C | 58.6 | 58.2 | 54.1 | 52 | 59.5 | 61.2 |
| | | | | | | |

| RPA (at 190°C) | | | | | | |
|---|---|---|---|---|---|---|
| G' at 1% strain | 3.5 | 3.4 | 3.1 | 3.4 | 2.6 | 2.9 |
| G' at 50% strain | 1.06 | 0.96 | 0.87 | 0.81 | 0.96 | 1 |
| Tanδ at 10% strain | 0.135 | 0.119 | 0.165 | 0.154 | 0.114 | 0.097 |

| Rotary Drum Abrasion | | | | | | |
|---|---|---|---|---|---|---|
| volume loss, mm3 | 120 | 99 | 134 | 104 | 129 | 108 |

| | | | | | | |
|---|---|---|---|---|---|---|
| MDR | | | | | | |
| T-5 at 121°C | 34 | 31 | 29 | 41 | 40 | 32 |
| T-25 at 150°C | 6.2 | 6 | 5.6 | 6.7 | 7 | 6.3 |
| T-90 at 150 °C | 10.8 | 15.8 | 10.3 | 23.3 | 14.1 | 19.1 |
| Min Torque at 150°C | 4.1 | 4.6 | 2.6 | 3.2 | 2.8 | 3.6 |
| Max Torque at 150°C | 21 | 23.5 | 19.3 | 23 | 17.7 | 22.4 |
| Delta Torque | 16.9 | 19 | 16.7 | 19.7 | 14.9 | 18.8 |

### Example 3

In this example, the effect of using a specific combination of curatives including a dithiophosphate on the properties of cured rubber samples is illustrated. Four rubber compounds were prepared using a two-stage mix procedure. All samples conformed to the basic recipe of Table 1 with varying compositions of curatives as shown in Table 8, with amounts shown in phr. Each of the samples was evaluated for various physical properties, as shown in Table 3.

**Table 7**

| | |
|---|---|
| SBR¹ | 103.13 |
| Polybutadiene | 25 |
| TDAE Oil | 15 |
| Silica | 90 |
| Silane | 7.2 |

| | |
|---|---|
| ¹ Solution polymerized styrene-butadiene with 39 percent bound styrene, 14.1 percent vinyl and Tg -33.2°C. | |

**Table 8**

| Sample No. | 12 | 13 | 14 | 15 |
|---|---|---|---|---|
| Zinc Oxide | 2.5 | 1 | 0.5 | 0.2 |
| Zinc 2-ethylhexanoate | 0 | 0 | 0 | 2 |
| Dithiophosphate¹ | 0 | 2.2 | 2.5 | 2.5 |
| Sulfenamide | 2.1 | 0.8 | 1 | 1 |
| Guanidine | 2.4 | 0 | 0 | 0 |
| Sulfur | 2 | 2 | 2 | 2 |

| | | | | |
|---|---|---|---|---|
| 1 Dithiophosphoryl polysulfide, as SDT/S from Rheinchemie | | | | |

**Table 9**

| Physical Properties (Cured 14 minutes at 160°C) | | | | |
|---|---|---|---|---|
| | | | | |
| Elongation at Break, % | 504 | 446 | 500 | 461 |
| True Tensile, MPa | 118 | 100 | 116 | 107 |
| 100% Modulus, MPa | 2.1 | 2.4 | 2.2 | 2.4 |
| 300% Modulus, MPa | 11.5 | 12.5 | 11.3 | 12.5 |
| Tensile Strength, MPa | 19.6 | 18.4 | 19.3 | 19.0 |
| Shore A Hardness | 66 | 68 | 67 | 67 |
| | | | | |
| Rebound 23 °C | 31.9 | 30 | 29.4 | 30 |
| Rebound 100°C | 61.1 | 61.1 | 59.7 | 61.3 |
| | | | | |

| RPA (at 190°C) | | | | |
|---|---|---|---|---|
| G' at 1% strain | 3 | 3.3 | 3.4 | 3.3 |
| G' at 50% strain | 1.02 | 0.97 | 1 | 1.01 |
| Tanδ at 10% strain | 0.126 | 0.114 | 0.114 | 0.108 |

| Rotary Drum Abrasion | | | | |
|---|---|---|---|---|
| volume loss, mm3 | 111 | 93 | 83 | 84 |
| | | | | |

| MDR | | | | |
|---|---|---|---|---|
| T-5 at 121°C | 32 | 30 | 27 | 35 |
| T-25 at 150°C | 5.7 | 5.8 | 5.1 | 6.8 |
| T-90 at 150°C | 11 | 17.5 | 11.4 | 15.7 |
| Min Torque at 150°C | 3.9 | 4.5 | 4.6 | 4.2 |
| Max Torque at 150°C | 20.2 | 25.2 | 23.5 | 23.8 |
| Delta Torque | 16.3 | 20.7 | 18.9 | 19.6 |

## Claims

1. A rubber composition comprising:
at least one diene based rubber;
a sulfur donor;
a sulfenamide accelerator; and
a dithiophosphate of the formula 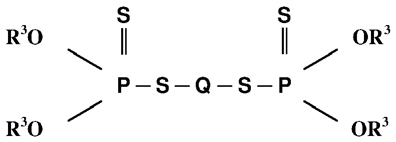 wherein Q is divalent Zn or S, R³ may be identical or different, and R³ is hydrogen or a monovalent hydrocarbon group of 1 to 18 carbon atoms; and
wherein the zinc content of the rubber composition is less than 0.5 parts by weight, per 100 parts by weight of elastomer (phr) as Zn metal.

2. The rubber composition of claim 1, **characterized in that** the zinc content of the rubber composition is less than 0.2 phr as Zn metal.

3. The rubber composition of claim 1, **characterized in that** the zinc content of the rubber composition is less than 0.1 phr as Zn metal.

4. The rubber composition of at least one of the previous claims, **characterized in that** the at least one addition diene based rubber is selected from the group consisting of natural rubber, synthetic polyisoprene, polybutadiene and SBR.

5. The rubber composition of at least one of the previous claims, **characterized in that** the sulfur donor is selected from the group consisting of elemental sulfur (free sulfur), an amine disulfide, polymeric polysulfide and sulfur olefin adducts.

6. The rubber composition of at least one of the previous claims, **characterized in that** the dithiophosphate is a zinc dithiophosphate.

7. The rubber composition of claim 1, **characterized in that** the dithiophosphate is a zinc dibutylphosphorodithioate or zinc dibutylphosphorodithioate.

8. The rubber composition of claim 1, **characterized in that** the accelerator comprises a guanidine and a thiuram.

9. The rubber composition of claim 1, **characterized in that** the dithiophosphate is present in an amount ranging from 1 to 10 phr.

10. The rubber composition of claim 1, **characterized in that** the dithiophosphate is present in an amount ranging from 2 to 5 phr.

11. The rubber composition, **characterized in that** the rubber composition further comprises silica.

12. The rubber composition of claim 11 wherein the composition comprises 30 to 150 phr of silica.

13. The rubber composition further comprising carbon black.

14. Use of the rubber composition in accordance with one of the previous claims as a tire tread rubber composition.

15. A pneumatic tire comprising a tread, the tread comprising the rubber composition in accordance with one of the claims 1-13.
